# EUROPÄISCHE PATENTSCHRIFT

(11) **EP 2 330 724 B1**
(45) Veröffentlichungstag und Bekanntmachung des Hinweises auf die Patenterteilung: **29.08.2012**
(21) Anmeldenummer: 09014932.9
(22) Anmeldetag: 02.12.2009
(51) Int. Cl.: H02K 49/10

(54) **Permanentmagnetkupplung**
Permanent magnetic coupling
Couplage d'aimant permanent

(43) Veröffentlichungstag der Anmeldung: 08.06.2011
(73) Patentinhaber: Ringfeder Power-Transmission GmbH, 64823 Gross-Umstadt (DE)
(72) Erfinder: Englert, Thomas, 63762 Grossostheim (DE)
(74) Vertreter: Lorenz, Bernd Ingo Thaddeus

(56) Entgegenhaltungen:
- JP-A- 1 141 206
- JP-A- 2001 327 154
- US-A1- 2004 066 107

## Beschreibung

Die Erfindung betrifft eine Permanentmagnetkupplung für die synchrone Übertragung von Drehmomenten mit einem Permanentmagnete aufweisenden ersten Organ und einem zweiten Organ, die als Innenrotor und Außenrotor ausgebildet sind und die durch einen Luftspalt getrennt sind, der sich zwischen den Organen erstreckt, wobei die Organe zur Ermöglichung einer synchronen Bewegung durch Kräfte gekoppelt sind, die von den Permanentmagneten im Zusammenwirken mit dem zweiten Organ erzeugt werden, wobei das erste Organ eine erste Gruppe von Permanentmagneten mit parallel zum Luftspalt verlaufenden Magnetisierungsrichtungen und eine zweite Gruppe von Permanentmagneten mit senkrecht zu dem Luftspalt verlaufenden Magnetisierungsrichtungen aufweist, wobei die Permanentmagnete der ersten Gruppe und der zweiten Gruppe des ersten Organs in Umfangsrichtung abwechselnd angeordnet sind und wobei in Umfangsrichtung gesehen die aufeinanderfolgenden Permanentmagnete der ersten Gruppe sowie die aufeinanderfolgenden Permanentmagnete der zweiten Gruppe jeweils eine entgegengesetzte Magnetisierungsrichtung aufweisen.

Permanentmagnetkupplungen ermöglichen eine verschleißfreie und berührungslose Übertragung von Kräften und Drehmomenten über den Luftspalt. Der Begriff Luftspalt bezieht sich in fachüblicher Weise allgemein auf den in einer Kraftübertragungsrichtung zwischen den Organen gebildeten Abstand, in dem beispielsweise auch ein Spalttopf vorgesehen sein kann, der eine leckagefreie Abdichtung zwischen den Organen ermöglicht. So können Permanentmagnetkupplungen mit einem Spalttopf beispielsweise in Pumpen eingesetzt werden, wobei durch die leckagefreie Kraft- bzw. Drehmomentübertragung auch bei umweltbelastenden, giftigen oder anderweitig gefährlichen Stoffen eine erhöhte Sicherheit durch die räumliche Trennung gewährleistet wird. Weitere Einsatzgebiete sind Anwendungen, bei denen eine Kraft- bzw. Drehmomentbegrenzung erforderlich sind, wobei bis zu einer vorgegebenen Kraft oder einem vorgegebenen Drehmoment die Organe eine synchronerer zumindest weitgehende synchrone Bewegung vollziehen und wobei die Permanentmagnetkupplung bei Erreichende vorgegebenen Grenzwertes durchrutscht. Solche Eigenschaften sind insbesondere bei Fertigungs- und Bearbeitungsmaschinen von Vorteil, wenn beispielsweise eine Überlastung vermieden oder der Erzeugung einer Schraubverbindung ein vorgegebenes Anzugsmoment eingehalten werden sollen. Da die Übertragung des Drehmomentes bzw. der Kraft berührungslos erfolgt, führt das Durchrutschen nicht zu einem Verschleiß der Kupplung, so dass diese für einen langzeitigen Einsatz unter starken Belastungen geeignet ist.

Um bei Permanentmagnetkupplungen zur Übertragung von Drehmomenten das über den Luftspalt wirksame Magnetfeld zu erzeugen, ist es bekannt, die an den Organen vorgesehenen Permanentmagnete mit ihren Magnetisierungsrichtungen entweder parallel oder senkrecht zu dem Luftspalt auszurichten. Entsprechende alternative Ausgestaltungen sind aus der FR 2 782 419 A1 bekannt. In dieser Druckschrift wird des Weiteren vorgeschlagen, durch die Form der Magnete winkelabhängig die zwischen den Organen wirkende Kraft zu modulieren.

Aus dem Bereich der elektromotorischen Antriebe ist es bekannt, Permanentmagnete mit unterschiedlichen Magnetisierungsrichtungen in Form eines so genannten Halbach-Arrays anzuordnen, wodurch der magnetische Fluss an der einen Seite der Konfiguration verringert und auf der gegenüberliegenden Seite verstärkt wird.

Permanentmagnetkupplungen mit den eingangs beschriebenen Merkmalen sind aus den Druckschriften GB 2 240 666 A und US 2004/0066107 A1 bekannt. Der Innenrotor und der Außenrotor der zur Drehmomentübertragung vorgesehenen Permanentmagnetkupplungen sind jeweils aus einer ersten Gruppe von Permanentmagneten und einer zweiten Gruppe von Permanentmagneten gebildet, die senkrecht zueinanderstehende Magnetisierungsrichtungen aufweisen. Um an dem ersten Organ und dem zweiten Organ eine zylindrische Form zu erreichen, weisen die Permanentmagnete eine äußerst aufwändige und an das jeweilige Durchmessermaß angepasste Form auf. Mit den Permanentmagnetkupplungen kann zwar insgesamt eine hohe Flussdichte erreicht werden, wobei auch die Anordnung von Rückflusselementen nicht zwangsläufig erforderlich ist, jedoch ist die Herstellung sehr aufwändig und kostspielig, da in ihrer Form speziell angepasste Magnete benötigt werden.

Neben gattungsgemäßen Permanentmagnetkupplungen für die synchrone Übertragung von Drehmomenten sind auch Wirbelstromkupplungen bekannt, die auf einem grundlegend anderen Funktionsprinzip basieren. Eine Wirbelstromkupplung ist beispielsweise in der JP 2001 327154 A beschrieben. Bei Wirbelstromkupplungen ist ein erstes Organ mit Permanentmagneten und ein zweites Organ aus einem leitfähigen Material vorgesehen. Bei der Drehung des ersten Organs induzieren die Magnete Wirbelströme in dem leitfähigen Material des zweiten Organs und damit ein gewisses Gegenmagnetfeld. Bei einer drehbaren Lagerung des zweiten Organs rotiert dieses bei einer reduzierten Drehzahl. Eine bleibende Magnetisierung in dem leitfähigen Material des zweiten Organs erfolgt nicht. Vielmehr wirkt sich das induzierte Feld in dem zweiten Organ entsprechend der unterschiedlichen Umdrehungszahl zwischen dem ersten und dem zweiten Organ. Wirbelstromkupplungen beruhen damit auf dem Prinzip einer asynchronen Übertragung.

Aus der JP 01141206 A ist ein Linearkolben bekannt, dessen innerer Teil in axialer Richtung versetzte Gruppen von Permanentmagneten aufweist.

Vor diesem Hintergrund liegt der Erfindung die Aufgabe zugrunde, eine Permanentmagnetkupplung für die synchrone Übertragung von Drehmomenten anzugeben, die bei einem kompakten Aufbau die Übertragung großer Drehmomente bzw. Kräfte ermöglicht und gleichzeitig einfach und kostengünstig gefertigt werden kann. Die Erfindung ist inden Ansprüchen 1-6 definiert.

Ausgehend von einer Permanentmagnetkupplung mit den eingangs beschriebenen Merkmalen wird die Aufgabe erfindungsgemäß dadurch gelöst, dass die Permanentmagnete der zweiten Gruppe ausgehend von dem Luftspalt derart gegenüber den Permanentmagneten der ersten Gruppe zurückversetzt angeordnet sind, dass zwischen dem Luftspalt und den Permanentmagneten der zweiten Gruppe permanentmagnetfreie Zwischenräume verbleiben, die seitlich von den Permanentmagneten der ersten Gruppe begrenzt sind.

Die Anordnung der Magnete erfolgt derart, dass an den einzelnen Zwischenräumen die angrenzenden Magnete mit gleichnamigen Polen in Richtung des jeweils betrachteten Zwischenraums weisen. Im Vergleich zu den bekannten Ausgestaltungen wird damit durch die Anordnung der einzelnen Magnete um die Zwischenräume herum die für den Eintritt des magnetischen Flusses zur Verfügung stehende Fläche vergrößert. In Bezug auf die Wechselwirkung mit dem zweiten Organ bilden die einzelnen Zwischenräume durch die Überlagerung der von den angrenzenden Magneten erzeugten Felder effektive Pole mit einer erhöhten Flussdichte, wodurch entweder die zu erreichenden Haltemomente erhöht oder bei einem vorgegebenen Haltemoment die Baugröße reduziert werden kann.

Dadurch, dass erfindungsgemäß die Zwischenräume mit den daran angrenzenden Magneten einen effektiven Pol bilden, ist zur Verwirklichung der erfindungsgemäßen Lehre keine aufwändige Ausgestaltung der einzelnen Magnete erforderlich. Insbesondere können für die Permanentmagnete der ersten Gruppe sowie der zweiten Gruppe des ersten Organs einfache Quaderformen vorgesehen sein. Die beispielsweise durch Sintern gefertigten und ggf. auf ein vorgegebenes Maß zugeschnittenen Permanentmagnete können so besonders kostengünstig und ohne Materialverluste gefertigt werden. Auch ist ein Rückgriff auf handelsübliche Standardmaße möglich, wodurch insgesamt sehr geringe Fertigungskosten auch bei Kleinserien oder Einzelanfertigungen erreicht werden. Da zur Bildung des ersten Organs einfache quaderförmige Magnete eingesetzt werden können, ist auch eine besonders flexible Anpassung, beispielsweise an verschiedene Durchmesservorgaben, mögfich.

In den permanentmagnetfreien Zwischenräumen ist zweckmäßigerweise ein Füllmaterial vorgesehen, um eine vorteilhafte räumliche Verteilung des magnetischen Flusses zu erreichen. Insbesondere kann ein Material mit einer hohen Permeabilität, beispielsweise ein weichmagnetisches Material vorgesehen sein. Geeignet ist insbesondere Weicheisen, welches in Form von geschichtetem Elektroblech vorliegen kann. Neben der Ausbildung einer gewünschten Feldverteilung kann das Füllmaterial auch dazu beitragen, die Magnete an dem ersten Organ zu halten und dem ersten Organ im Bereich des Luftspaltes eine gleichmäßige Oberflächenstruktur zu verleihen.

Da im Rahmen der erfindungsgemäßen Ausgestaltung die Permanentmagnete der zweiten Gruppe zurückversetzt angeordnet sind und sämtliche Permanentmagnete des ersten Organs vorzugsweise nicht auf aufwändige Weise schräg geformt sind, tritt an der den Zwischenräumen gegenüberliegenden Seite der Permanentmagnete der zweiten Gruppe ein magnetischer Fluss aus, der nicht zu vernachlässigen ist. Um vor diesem Hintergrund magnetische Verluste und unerwünschte Streufelder zu vermeiden, ist vorzugsweise ein Träger für die Permanentmagnete als Rückflusselement ausgebildet. Dieser Träger kann beispielsweise aus einem ferromagnetischen Material, beispielsweise geschichtetem Elektroblech gebildet sein.

Im Rahmen der vorliegenden Erfindung, kann auch das zweite Organ Permanentmagnete aufweisen, die über den Luftspalt mit den Permanentmagneten des ersten Organs zusammenwirken. Wie auch für das erste Organ können die Magnete aus üblichen Magnetwerkstoffen wie beispielsweise NdFeB, NeFeBo oder SmCo gebildet sein. Auch bezüglich der Materialauswahl ist es von Vorteil, dass einfache quaderförmige Magnete eingesetzt werden können, so dass an das jeweilige Herstellungsverfahren keine besonderen Anforderungen zu stellen sind. Durch die festgelegte Geometrie der Organe erfolgt bei der beschriebenen Ausgestaltung der Permanentmagnetkupplung unmittelbar bis zu dem Durchrutschen eine völlig synchrone Übertragung der Bewegung zwischen den Organen.

Für die Anordnung der Permanentmagnete des zweiten Organs kann in herkömmlicherweise eine Ausrichtung sämtlicher Magnete mit Ihrer Magnetisierungsrichtung senkrecht oder parallel zu dem Luftspalt vorgesehen sein. Um besonders große Kräfte oder Drehmomente übertragen zu können, kann aber auch an dem zweiten Organ eine Anordnung die an dem ersten Organ mit einer ersten Gruppe und einer zweiten Gruppe von Permanentmagneten vorgesehen sein, wobei die Permanentmagnete der ersten Gruppe und der zweiten Gruppe unterschiedliche Magnetisierungsrichtungen aufweisen und wobei zwischen den Permanentmagneten der zuvor beschriebene permanentmagnetfreie Zwischenraum verbleibt.

Gemäß einer alternativen Ausgestaltung der Erfindung weist das zweite Organ ein magnetisierbares Material auf, welches mit den Permanentmagneten des ersten Organs zusammenwirkt.

Das magnetisierbare Material ist vorzugsweise ein Hysteresematerial, bei dem die Ummagnetisierung erst bei dem Vorliegen eines gewissen Gegenfeldes erfolgt. Entsprechende Permanentmagnetkupplungen werden in der Praxis auch als Hysteresekupplungen bezeichnet. Bei kleinen zu übertragenden Kräften bzw. Drehmomenten erfolgt wie bei der zuvor beschriebenen Ausgestaltung mit Permanentmagneten an dem ersten Organ sowie dem zweiten Organ eine synchrone Übertragung der Kraft bzw. des Drehmomentes. Unter halb der maximal zu übertragenden Kraft bzw. unterhalb des maximal zu übertragenden Drehmomentes ist das magnetisierbare Material nämlich durch die Permanentmagnete des ersten Organs in einer bestimmten Weise magnetisiert, so dass dann eine synchrone Bewegung der Organe erfolgt, Bei der Annährung an den vorgegebenen Grenzwert beginnen eine Ummagnetisierung des Hysteresematerials und entsprechend ein Rutschen der Kupplung so dass dann keine synchrone Bewegung mehr vorliegt. Da in dem magnetisierbaren Material die Feldverteilung nicht dauerhaft vorgegeben ist, wird üblicherweise ein weicheres Schlupfverhalten als bei Permanentmagnetkupplungen beobachtet, bei denen wie zuvor beschrieben auch das zweite Organ mit Permanentmagneten belegt ist. Durch die Auswahl des Materials können die Ummagnetisierungsverluste (Hystereseverluste) und damit auch eine Abbremsung durch Umwandlung in Wärmeenergie eingestellt werden. Bei der Abbremsung durch eine Umwandlung in Wärmeenergie ist bei der Auslegung der Permanentmagnetkupplung auch eine ausreichende Kühlung vorzusehen. Als Hysteresematerial ist beispielsweise ein AlNiCo-Material geeignet, wobei eine solche Legierung neben Aluminium (AI), Nickel (Ni) und Kobalt (Co) auch Eisen (Fe), Kupfer (Cu) sowie Titan (Ti) enthalten kann.

Schließlich ist es auch möglich, dass das zweite Organ sowohl Permanentmagnete als auch magnetisierbares Material aufweist, wodurch die Eigenschaften der Kupplung gemäß den jeweiligen. Erfordernissen genauer eingestellt werden können.

Die Erfindung wird im Folgenden anhand einer lediglich ein Ausführungsbeispiel darstellenden Zeichnung erläutert. Es zieigen schematisch:
- Fig. 1: eine Schnittdarstettung durch eine zur Drehmomentübertragung vorgesehenen Permanentmagnetkupplung,
- Fig. 2: ein Ausschnitt der Fig. 1 in einer Detailansicht,
- Fig. 3: die Teile einer Permanentmagnetkupplung in einer perspektivischen Ansicht,
- Fig. 4 und 5: alternative Ausgestaltungen einer Permanentmagnetkupplung zur Drehmomentübertragung.

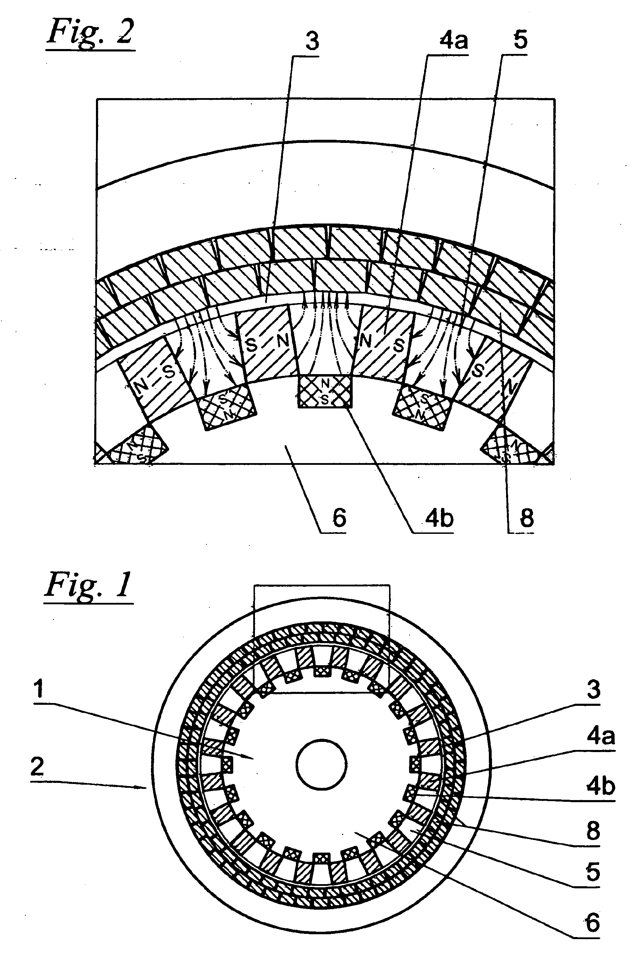

Fig. 1 zeigt eine Permanentmagnetkupplung für die Übertragung von Drehmomenten mit einem als Innenrotor ausgebildeten ersten Organ 1 und einem als Außenrotor ausgebildeten zweiten Organ 2, die durch einen Luftspalt 3 getrennt sind. Das erste Organ 1 weist eine erste Gruppe von Permanentmagneten 4a sowie zwischen diesen Permanentmagneten 4a angeordnete Permanentmagnete 4b einer zweiten Gruppe auf.

In der Detailansicht der Fig. 2 ist zu erkennen, dass die Magnetisierungsrichtungen der ersten Gruppe von Permanentmagneten 4a parallel zu dem jeweils angrenzenden Luftspalt 3 in Umfangsrichtung ausgerichtet sind, wobei die in Umfangsrichtung aufeinanderfolgenden Permanentmagnete 4a der ersten Gruppe wechselweise entgegengesetzte Magnetisierungsrichtungen aufweisen.

Ausgehend von dem Luftspalt 3 sind die Permanentmagnete 4b der zweiten Gruppe derart gegenüber den Permanentmagneten 4a der ersten Gruppe zurückversetzt, dass zwischen dem Luftspalt 3 und den Permanentmagneten 4b der zweite Gruppe permanentmagnetfreie Zwischenräume 5 verbleiben, die seitlich von dem Permanentmagneten 4a der ersten Gruppe begrenzt sind. Die Magnetisierungsrichtungen der Permanentmagnete 4b der zweiten Gruppe sind derart senkrecht zu dem Luftspalt 3 ausgerichtet, so dass an jeweils drei Flächen der einzelnen Zwischenräume 5 die angrenzenden Permanentmagnete 4a, 4b entweder alle mit ihrem Nordpol oder mit ihrem Südpol angrenzen. Durch diese Anordnung werden an den Zwischenräume 5 durch die Überlagerung der Felder der angrenzenden Permanentmagnete 4a, 4b effektive Pole mit einer erhöhten Flussdichte gebildet. Dies ist darauf zurückzuführen, dass durch die zurückversetzte Anordnung der Permanentmagnete 4b der zweiten Gruppe die für den Eintritt des magnetischen Flusses zur Verfügung stehende Fläche maximiert wird. Um hohe Feldstärken zu erreichen und Verluste zu vermeiden, sind die Zwischenräume 5 mit einem weichmagnetischen Material, beispielsweise geschichteten Elektroblechen ausgefüllt. Zusätzlich sind die Permanentmagnete 4a, 4b auf einem Träger 6 des ersten Organs angeordnet, der ein Rückflusselement bildet.

Der Außenrotor als zweites Organ 2 ist mit Segmenten eines Hysteresematerials 8 belegt, wobei die Segmente zur weiteren Erhöhung des Drehmomentes in zwei Reihen übereinander angeordnet sind.

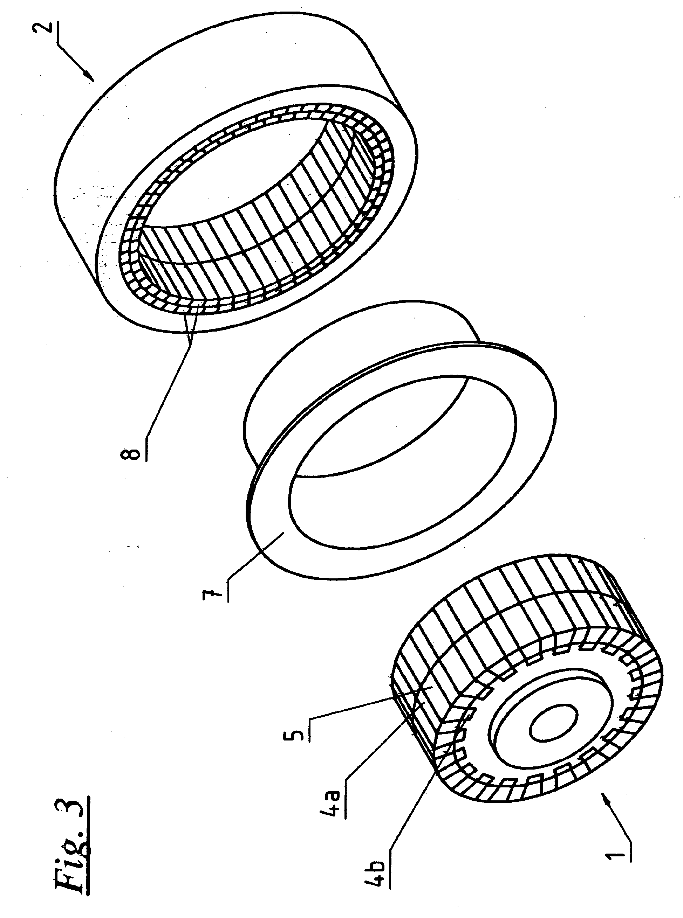

Wie einer vergleichenden Betrachtung der Figuren 2 und 3 zu entnehmen ist, sind sämtliche Permanentmagnete 4a, 4b und die Segmente des Hysteresematerials 8 der Permanentmagnetkupplung quaderförmig ausgebildet. Obwohl durch die erfindungsgemäß vorgesehene Anordnung der Permanentmagnete 4a, 4b an dem ersten Organ besonders hohe Flussdichten und damit besonders hohe zu übertragende Drehmomente erreicht werden, ist die Permanentmagnetkupplung durch den Einsatz handelsüblicherweise, stabförmiger Magnete 4a, 4b bzw. Segmente besonders günstig zu fertigen. Insbesondere kann durch eine einfache Änderung der Geometrie und Belegung mit Permanentmagneten 4a, 4b eine Anpassung im Hinblick auf die Abmessungen und/oder des zu erreichenden Drehmomentes erfolgen.

Wie der Fig. 3 des Weiteren zu entnehmen ist, können in Längsrichtung gesehen ohne Einschränkung auch mehrere Ringe von Permanentmagneten 4a, 4b vorgesehen sein, so dass sich auch dadurch unter Verwendung von Standardbauteilen weitere Variationsmöglichkeiten ergeben.

Zwischen dem ersten Organ 1 und dem zweiten Organ 2 kann ein Trennelement in Form eines Spalttopfes 7 vorgesehen sein, der eine leckagefreie Trennung der Organe 1, 2 ermöglicht. Nicht dargestellt ist die üblicherweise vorgesehene Lagerung der Organe 1, 2, beispielsweise mittels Wälzlagern,

Die in den Fig. 1 bis 3 dargestellte Permanentmagnetkupplung ist zur Übertragung eines Drehmomentes vorgesehen, wobei eines der Organe 1, 2 einem Antrieb und das andere Organ 2, 1 einem Abtrieb zugeordnet ist. Wenn beispielsweise das innenliegende erste Organ drehend angetrieben wird, bewegt sich aufgrund der zwischen den Permanentmagneten 4a, 4b und dem Hysteresematerial 8 wirkenden Kräfte das zweite Organ 2 synchron mit, bis ein durch die Wechselwirkung der Permanentmagnete 4a, 4b mit dem Hysteresematerial 8 bestimmtes Grenzdrehmoment erreicht wird. Bei Erreichen des Grenzdrehmomentes reichen die über den Luftspalt 3 übertragenden Kräfte nicht mehr aus, um bei einem Antrieb des ersten Organs 1 das zweite Organ 2 mitnehmen zu können, so dass dann die Permanentmagnetkupplung durchrutscht. Insbesondere kann ein solches Durchrutschen gezielt eingesetzt werden, um bei bestimmten Montagevorgängen ein genau vorgegebenes Drehmoment einzuhalten oder auch bei Bearbeitungsmaschinen oder anderen Antrieben eine Überlastung zu vermeiden.

Bei einer Permanentmagnetkupplung zur Übertragung von Drehmomenten mit einem Innenläufer und einem Außenläufer kann aufgrund der Drehbewegung ein freies Durchrutschen erfolgen. Hier ergibt sich dann bei einer Ausgestaltung mit einem Hysteresematerial 8 an dem zweiten Organ 2 der Vorteil, dass durch die Ummagnetisierungsverluste eine Abbremsung erfolgt. Durch die Auswahl des Hysteresematerials 8 oder Variation des Luftspaltes kann dabei die Bremskraft eingestellt werden. Denkbar sind auch Ausgestaltungen, bei denen das zweite Organ 2 sowohl Permanentmagnete 4c als auch ein Hysteresematerial 8 umfasst.

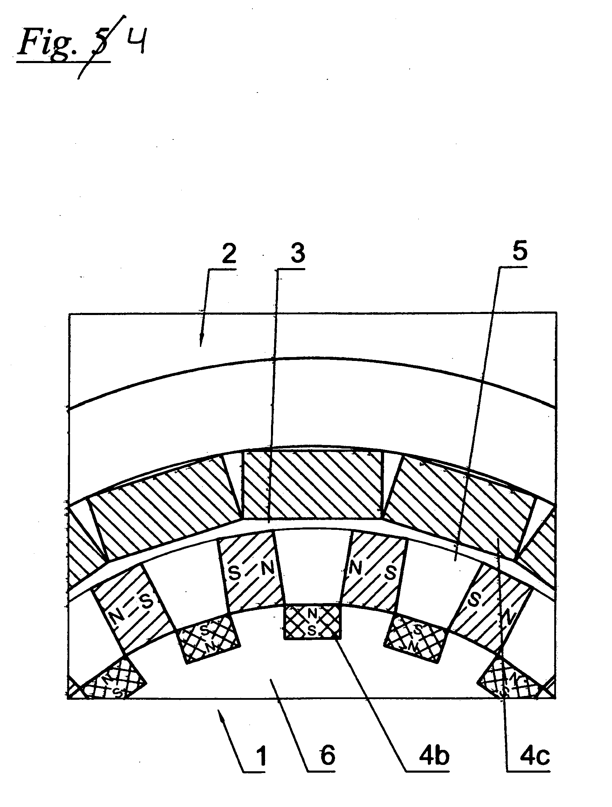

Fig. 4 zeigt eine alternative Ausgestaltung einer Permanentmagnetkupplung, bei der der Außenrotor als zweites Organ 2 auch mit Permanentmagneten 4c belegt ist. Der Innenrotor als erstes Organ 1 ist wie bei der in den Figuren 1 bis 3 dargestellten Hysteresekupplung ausgebildet. Jedem permanentmagnetfreien Zwischenraum 5 des ersten Organs 1 liegt ein entgegengesetzt gepolter Permanentmagnet 4c des zweiten Organs 2 gegenüber, so dass sich für den lnnenrotor und den Außenrotor um den Umfang gesehen eine gleiche Polteilung ergibt. In dem dargestellten Ausführungsbeispiel sind auch die Permanentmagnete 4c des zweiten Organs quaderförmig ausgebildet, so dass diese in ihrer Anordnung die Kontur eines Vieleckes bilden. Alternativ kann auch vorgesehen sein, die Permanentmagnete 4c trapezförmig auszugestalten und/oder an ihrer dem Luftspalt 3 zugewandten Seite mit einer Krümmung zu versehen, um den vorliegenden Bauraum optimal auszunutzen.

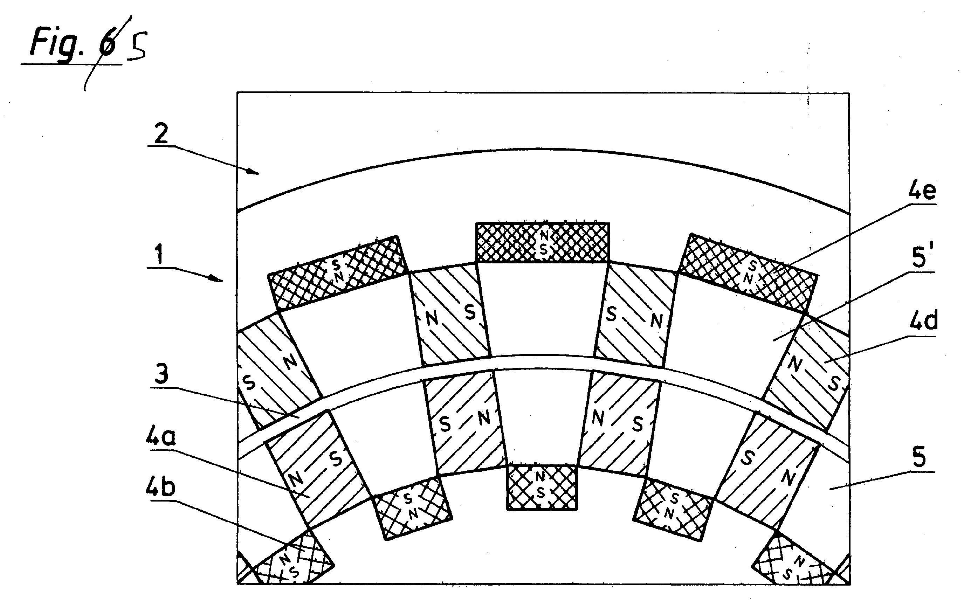

Fig. 5 zeigt eine weitere Ausgestaltung einer Permanentmagnetkupplung, bei der der Innenrotor als erstes Organ 1 wie im Zusammenhang mit der Fig. 4 beschrieben ausgebildet ist. Allerdings ist bei dem Außenrotor als zweitem Organ 2 die Anordnung einer ersten Gruppe von Permanentmagneten 4d und einer zweiten Gruppe von Permanentmagneten 4e vorgesehen. Die Permanentmagnete 4d, 4e sind wie auch bei dem ersten Organ 1 so angeordnet, dass permanentmagnetfreie Zwischenräume 5' gebildet werden, wobei an jeweils drei Flächen der einzelnen Zwischenräume 5' die umgebenden Permanentmagnete 4d, 4e entweder alle mit ihrem Nordpol oder ihrem Südpol angrenzen. Die Zwischenräume 5' sind mit einem weichmagnetischen Material, beispielsweise Weicheisen ausgefüllt. Das Weicheisen kann in Form von geschichtetem Elektroblech vorliegen.

## Patentansprüche

1. Permanentmagnetkupplung für die synchrone Übertragung von Drehmomenten mit einem Permanentmagnete (4a, 4b) aufweisenden ersten Organ (1) und einem zweiten Organ (2), die als Innenrotor und Außenrotor ausgebildet sind und die durch einen Luftspalt (3) getrennt sind, der sich zwischen den Organen (1, 2) erstreckt, wobei die Organe (1, 2) zur Ermöglichung einer synchronen Bewegung durch Kräfte gekoppelt sind, die von den Permanentmagneten (4a, 4b) im Zusammenwirken mit dem zweiten Organ (2) erzeugt werden, wobei das erste Organ (1) eine erste Gruppe von Permanentmagneten (4a) mit parallel zum Luftspalt (3) verlaufenden Magnetisierungsrichtungen und eine zweite Gruppe von Permanentmagneten (4b) mit senkrecht zum Luftspalt (3) verlaufenden Magnetisierungsrichtungen aufweist, wobei die Permanentmagnete (4a, 4b) der ersten Gruppe und der zweiten Gruppe des ersten Organs (1) in Umfangsrichtung abwechselnd angeordnet sind und wobei in Umfangrichtung gesehen die aufeinanderfolgenden Permanentmagnete (4a) der ersten Gruppe sowie die aufeinanderfolgenden Permanentmagnete (4b) der zweiten Gruppe jeweils eine entgegengesetzte Magnetisierungsrichtung aufweisen, **dadurch gekennzeichnet, dass** die Permanentmagnete (4b) der zweiten Gruppe ausgehend von dem Luftspalt (3) derart gegenüber den Permanentmagneten (4a) der ersten Gruppe zurückversetzt angeordnet sind, dass zwischen dem Luftspalt (3) und den Permanentmagneten (4b) der zweiten Gruppe permanentmagnetfreie Zwischenräume (5) verbleiben, die seitlich von den Permanentmagneten (4a) der ersten Gruppe begrenzt sind wobei die Anordnung der Magnete derat erfolgt, dass an den einzelnen Zwischenräumen die angrenzenden Magnete mit gleichnamigen Polen in Richtung des jeweils betrachteten Zwischenraums weisen.

2. Permanentmagnetkupplung nach Anspruch 1, **dadurch gekennzeichnet, dass** in den permanentmagnetfreien Zwischenräumen (5) ein Füllmaterial angeordnet ist.

3. Permanentmagnetkupplung nach Anspruch 1 oder 2, **dadurch gekennzeichnet, dass** die Permanentmagnete (4a, 4b, 4c, 4d, 4e) der ersten Gruppe und/oder der zweiten Gruppe quaderförmig sind.

4. Permanentmagnetkupplung nach Anspruch 3, **dadurch gekennzeichnet, dass** sämtliche Permanentmagnete (4a, 4b, 4c, 4d, 4e) der Permanentmagnetkupplung quaderförmig sind.

5. Permanentmagnetkupplung nach einem der Ansprüche 1 bis 4, dadurch dekennzeichnet, dass das zweite Organ (2) Permanentmagnete (4c, 4d, 4e) aufweist, die mit den Permanentmagneten (4a, 4b) des ersten Organs (1) zusammenwirken.

6. Permanentmagnetkupplung nach einem der Ansprüche 1 bis 4, **dadurch gekennzeichnet, dass** das zweite Organ (2) ein magnetisierbares Material, vorzugweise ein Hysteresematerial, aufweist, welches mit den Permanentmagneten (4a, 4b) des ersten Organs (1) zusammenwirkt.

## Claims

1. A permanent magnet coupling for the synchronous transmission of torques with a first member (1) having permanent magnets (4a, 4b) and a second member (2), which are configured as inner rotor and outer rotor and which are separated by an air gap (3), which extends between the members (1, 2), wherein the members (1, 2) are coupled to allow synchronous movement by forces which are generated by the permanent magnets (4a, 4b) in interaction with the second member (2), wherein the first member (1) has a first group of permanent magnets (4a) with magnetisation directions running parallel to the air gap (3) and a second group of permanent magnets (4b) with magnetisation directions running perpendicularly to the air gap (3), wherein the permanent magnets (4a, 4b) of the first group and of the second group of the first member (1) are arranged alternately in the circumferential direction and wherein the successive permanent magnets (4a) of the first group and the successive permanent magnets (4b) of the second group each have opposing magnetisation directions as seen in the circumferential direction, **characterised in that** the permanent magnets (4b) of the second group are arranged in a set back manner in relation to the permanent magnets (4a) of the first group starting from the air gap (3), in such a manner that permanent-magnet-free interspaces (5) remain between the air gap (3) and the permanent magnets (4b) of the second group, which interspaces are delimited laterally by the permanent magnets (4a) of the first group, wherein the arrangement of the magnets is such that the magnets with the same poles adjacent to the individuals interspaces face in the direction of the interspace in question.

2. The permanent magnet coupling according to Claim 1, **characterised in that** a filler material is arranged in the permanent-magnet-free interspaces (5).

3. The permanent magnet coupling according to Claim 1 or 2, **characterised in that** the permanent magnets (4a, 4b, 4c, 4d, 4e) of the first group and/or of the second group are square-shaped.

4. The permanent magnet coupling according to Claim 3, **characterised in that** all the permanent magnets (4a, 4b, 4c, 4d, 4e) of the permanent magnet coupling are square-shaped.

5. The permanent magnet coupling according to one of Claims 1 to 4, **characterised in that** the second member (2) has permanent magnets (4c, 4d, 4e) which interact with the permanent magnets (4a, 4b) of the first member (1).

6. The permanent magnet coupling according to one of Claims 1 to 4, **characterised in that** the second member (2) has a magnetisable material, preferably a hysteresis material, which interacts with the permanent magnets (4a, 4b) of the first member (1).

## Revendications

1. Accouplement à aimant permanent pour la transmission synchrone de couples avec un premier organe (1) présentant des aimants permanents (4a, 4b) et un second organe (2), qui sont conçus sous forme de rotor interne et de rotor externe et qui sont séparés par une fente d'air (3), laquelle s'étend entre les organes (1, 2), les organes (1, 2) étant couplés pour permettre un mouvement synchrone par des forces qui sont générées par les aimants permanents (4a, 4b) en interaction avec le second organe (2), le premier organe (1) présentant un premier groupe d'aimants permanents (4a) avec des sens de magnétisation agencés parallèlement à la fente d'air (3) et un second groupe d'aimants permanents (4b) avec des sens de magnétisation agencés perpendiculairement à la fente d'air (3), les aimants permanents (4a, 4b) du premier groupe et du second groupe du premier organe (1) étant disposés en alternance dans le sens périphérique et, vus dans le sens périphérique, les aimants permanents (4a) successifs du premier groupe et les aimants permanents (4b) successifs du second groupe présentant à chaque fois un sens de magnétisation opposé, **caractérisé en ce que** les aimants permanents (4b) du second groupe sont disposés avec un décalage à partir de la fente d'air (3) par rapport aux aimants permanents (4a) du premier groupe de telle sorte que, entre la fente d'air (3) et les aimants permanents (4b) du second groupe, il reste des interstices (5) sans aimant permanent qui sont délimités sur le côté par les aimants permanents (4a) du premier groupe, l'agencement des aimants s'effectuant de telle sorte que, sur les différents interstices, les aimants contigus présentant des pôles de même nom sont dirigés en direction de l'interstice respectivement concerné.

2. Accouplement à aimant permanent selon la revendication 1, **caractérisé en ce qu'**un matériau de remplissage est disposé dans les interstices (5) sans aimant permanent.

3. Accouplement à aimant permanent selon la revendication 1 ou 2, **caractérisé en ce que** les aimants permanents (4a, 4b, 4c, 4d, 4e) du premier groupe et/ou du second groupe sont en forme de parallélépipède.

4. Accouplement à aimant permanent selon la revendication 3, **caractérisé en ce que** tous les aimants permanents (4a, 4b, 4c, 4d, 4e) de l'accouplement à aimant permanent ont une forme de parallélépipède.

5. Accouplement à aimant permanent selon l'une des revendications 1 à 4, **caractérisé en ce que** le second organe (2) présente des aimants permanents (4c, 4d, 4e), qui interagissent avec les aimants permanents (4a, 4b) du premier organe (1).

6. Accouplement à aimant permanent selon l'une des revendications 1 à 4, **caractérisé en ce que** le second organe (2) présente un matériau, un matériau magnétisable, de préférence un matériau d'hystérésis, qui interagit avec les aimants permanents (4a, 4b) du premier organe (1).
